# EUROPÄISCHE PATENTSCHRIFT

(11) **EP 1 055 527 B1**
(45) Veröffentlichungstag und Bekanntmachung des Hinweises auf die Patenterteilung: **18.09.2002**
(21) Anmeldenummer: 99109895.5
(22) Anmeldetag: 20.05.1999
(51) Int. Cl.: B60B 21/00

(54) **Radfelge**
Wheel rim
Jante

(43) Veröffentlichungstag der Anmeldung: 29.11.2000
(73) Patentinhaber: Ford Global Technologies, Inc., Dearborn, Michigan 48331 (US)
(72) Erfinder: Haverkamp, Michael, Dr., 50733 Köln (DE); König, Michael, 41540 Dormagen (DE)
(74) Vertreter: Bonsmann, Manfred, Dipl.-Ing.

(56) Entgegenhaltungen:
- EP-A- 0 029 120
- EP-A- 0 663 306
- WO-A-98/33666
- US-A- 4 896 921
- PATENT ABSTRACTS OF JAPAN vol. 018, no. 383 (M-1640), 19. Juli 1994 (1994-07-19) & JP 06 106903 A (MAZDA MOTOR CORP), 19. April 1994 (1994-04-19)
- PATENT ABSTRACTS OF JAPAN vol. 012, no. 384 (M-753), 13. Oktober 1988 (1988-10-13) & JP 63 137005 A (SUMITOMO RUBBER IND LTD;OTHERS: 01), 9. Juni 1988 (1988-06-09)
- PATENT ABSTRACTS OF JAPAN vol. 013, no. 340 (M-857), 31. Juli 1989 (1989-07-31) & JP 01 115704 A (BRIDGESTONE CORP), 9. Mai 1989 (1989-05-09)

## Beschreibung

Die Erfindung bezieht sich auf eine Radfelge mit einer Umfangsfläche, die mit einem auf der Radfelge aufmontierbaren Reifen einen Hohlraum ausbildet sowie quer zur Umfangsrichtung eine vorgegebene Sollform aufweist und längs der sich ein schallabsorbierendes Material erstreckt, das im Hohlraum an der Radfelge anliegt und unterhalb eines Flächengebildes angeordnet ist, das sich quer über die gesamte Breite des schallabsorbierenden Materials erstreckt.

Reifenlärm entsteht durch Resonanz in dem luftgefüllten Hohlraum zwischen Radfelge und Reifen. Versuche, die Lärmbelästigung der Fahrgäste im Fahrgastraum durch Schallschutzmaßnahmen an der Karosserie zu beseitigen, führten nicht zum gewünschten Ergebnis. Ebenso erreichten Bemühungen, das Entstehen der Hohlraumresonanzen an sich zu vermeiden, nicht ihr Ziel. So konnte die Resonanz durch eine Erhöhung der Steifigkeit der Radfelge nicht verhindert werden.

Es ist auch versucht worden, die Resonanz durch Einvulkanisieren oder Einkleben eines Dämpfungsbandes an der Innenwand des Reifens zu verhindern. Jedoch hat sich herausgestellt, daß auf diese Weise eine Reduzierung der Lärmbelästigung ebenfalls nicht zu erreichen ist. In der gattungsgemässen EP 0 029 120 A ist vorgeschlagen worden, zur Senkung der Lärmabstrahlung von Reifen schallabsorbierende Materialien an den Reifenwülsten oder an der Radfelge zu befestigen und in den Innenraum des Reifens hineinragen zu lassen. Hierdurch soll weitgehend eine Nachrüstung vorhandener Reifen bzw. dazugehörender Elemente möglich werden. Nachteilig ist dabei jedoch, daß, wenn die schallabsorbierenden Materialien an den Reifenwülsten befestigt sind, diese bei einem Reifenwechsel zwangsweise mitausgetauscht werden oder, wenn sie an der Radfelge befestigt sind, beim Reifenwechsel aufgrund des Hineinragens in den Reifeninnenraum leicht beschädigt werden können.

Demgegenüber liegt die Aufgabe der vorliegenden Erfindung darin, eine gattungsgemäße Radfelge so zu verbessern, daß die Hohlraumresonanz beseitigt wird, ohne daß das schallabsorbierende Material bei einem Reifenwechsel ausgetauscht wird oder der Gefahr einer Beschädigung ausgesetzt ist.

Erfindungsgemäß wird diese Aufgabe bei einer Radfelge der eingangs genannten Art dadurch gelöst, daß in der Umfangsfläche eine vertiefte Aufnahme für das schallabsorbierende Material ausgebildet ist und die Oberseite des Flächengebildes mit der vorgegebenen eigentlichen Form der Umfangsfläche übereinstimmt.

Es hat sich herausgestellt, daß mit der erfindungsgemäßen Anordnung des schallabsorbierenden Materials in einer Vertiefung in der Umfangsfläche der Radfelge eine vollständige Beseitigung der Resonanz in dem Hohlraum zwischen Reifen und Radfelge erreicht wird. Ein Hineinragen des schallabsorbierenden Materials in den Innenraum des Reifens ist hierzu nicht notwendig. Die Breite der Aufnahme kann beispielsweise 5 cm und ihre Tiefe ca. 2 cm betragen. Da erfindungsgemäß die Oberseite eines oberhalb des schallabsorbierenden Materials angeordneten Flächengebildes die eigentliche Sollform der Radfelge wieder ausbildet, ist zum Ansetzen des Werkzeugs für einen Reifenwechsel der Raum vorhanden, der auch bei aus dem Stand der Technik bekannten Radfelgen ohne die Anordnung von schallabsorbierendem Material zur Verfügung steht, so daß das schallabsorbierende Material vor einer Beschädigung durch das Werkzeug geschützt ist.

In einer bevorzugten Ausführungsform der Erfindung umläuft die Aufnahme die Radfelge durchgehend. Diese Ausführungsform ist beispielsweise für Stahlfelgen in Blechbauweise besonders geeignet, da zur Ausbildung der Aufnahme während der Fertigung lediglich ein zusätzlicher Rollvorgang notwendig ist.

Vorzugsweise ist das Flächengebilde eine in Umfangsrichtung durchgehend verlaufende perforierte Abdeckung. Hierdurch wird ein größtmöglicher Schutz des schallabsorbierenden Materials erreicht.

Alternativ ist es aber auch möglich, das Flächengebilde als in Umfangsrichtung mit Abstand zueinander angeordnete, quer zur Umfangsrichtung verlaufende Rippen auszubilden. Mit diesen Maßnahmen wird eine größtmögliche freie Oberfläche des schallabsorbierenden Materials erzielt, um einen möglichst großen Oberflächenanteil des schallabsorbierenden Materials den Schallwellen auszusetzen. Zudem wird der Materialverbrauch hierdurch gesenkt.

In weiterer günstiger Fortbildung der Erfindung sind die Flächengebilde an die Umfangsfläche geschweißt. Wenn die Radfelge und die Flächengebilde aus Stahl hergestellt sind, kann so auf einfache Weise eine sichere Verbindung zwischen Radfelge und Flächengebilde hergestellt werden. Besonders bevorzugt erfolgt die Verbindung durch Punktschweißen.

In einer alternativen, ebenfalls vorteilhaften Ausführungsform der Erfindung sind beidseits der Aufnahme Befestigungsnuten vorgesehen, in denen die Flächengebilde durch eine Klipp- bzw. Schnapp- oder durch eine Klebeverbindung befestigt sind. Diese Art der Befestigung erweist sich vor allem bei Radfelgen und Flächengebilde aus Aluminium als vorteilhaft.

In einer weiteren, ebenfalls günstigen Weiterbildung der Erfindung ist die Aufnahme aus einzelnen Aufnahmekammern gebildet und sind die Flächengebilde die Oberseiten quer zur Umfangsrichtung verlaufender Stege, die die Aufnahmekammern voneinander trennen. Diese Ausgestaltung ist vor allem für Radfelgen in Schmiede- oder Gußausführung gedacht. Mit diesen Maßnahmen kann ein Gleiten des schallabsorbierenden Materials längs des Umfangs der Radfelge auf einfache Weise verhindert werden.

Vorzugsweise ist auf die Oberseite des schallabsorbierenden Materials eine dünne perforierte Folie aufgebracht, die 0,05 mm dick ist. Die Folie kann beispielsweise an der Innenseite der Flächengebilde angebracht sein. Durch die Anordnung der Folie wird die Haltbarkeit des schallabsorbierenden Materials erhöht, da örtliche Reibbelastungen zwischen schallabsorbierenden Material und Flächengebilde vermieden werden.

Vorzugsweise beträgt bei perforierten Flächengebilden und/oder Folien die Gesamtfläche der Perforationsöffnungen mehr als 40% der Abdeckfläche. Hierdurch ist ein vollständiger Abbau der Resonanz in jedem Fall gewährleistet.

Die Erfindung wird nachfolgend anhand der Zeichnung beispielshalber noch näher erläutert. Es zeigen:
- Figur 1: eine Querschnittsansicht einer ersten Ausführungsform einer erfindungsgemäßen Radfelge, bei der das Flächengebilde als perforiertes Blech ausgebildet und mit der Radfelge verschweißt ist,
- Figur 2: in vergrößertem Maßstab und in Teil-Perspektivansicht eine der Figur 1 ähnliche Ausführungsform, bei der das perforierte Blech in Nuten der Radfelge befestigt ist,
- Figur 3: einen Schnitt längs Linie III-III in Figur 2,
- Figur 4: eine der Figur 1 ähnliche Querschnittsansicht einer weiteren Ausführungsform einer erfindungsgemäßen Radfelge, bei der das Flächengebilde durch mehrere Rippen ausgebildet ist, die mit der Radfelge verschweißt sind,
- Figur 5: in vergrößertem Maßstab und in Teil-Perspektivansicht eine der Figur 4 ähnliche Ausführungsform, bei der die Rippen in Nuten der Radfelge befestigt sind,
- Figur 6: einen Schnitt längs Linie VI-VI in Figur 5,
- Figur 7: eine den Figuren 1 und 4 ähnliche Querschnittsansicht einer weiteren Ausführungsform einer erfindungsgemäßen Radfelge, bei der die Radfelge als Druckgußteil hergestellt ist und mitgegossene Stege aufweist;
- Figur 8: in vergrößertem Maßstab und in Teil-Perspektivansicht den oberen Abschnitt der Radfelge aus Figur 7 und
- Figur 9: einen Schnitt längs Linie IX-IX in Figur 8.

Die in den Figuren dargestellten Ausführungsbeispiele erfindungsgemäßer Radfelgen 1 weisen neben den bekannten Einrichtungen zur Anlage der Reifenwülste schlauchloser Reifen und zur Befestigung an den Radachsen eines Fahrzeuges 2 bzw. 3 in ihrer Umfangsfläche 4 eine Aufnahme 5 für schallabsorbierendes Material 6 auf, die gegenüber der eigentlichen Sollform 7 der Radfelgen 1 als Vertiefung ausgebildet ist. Die Aufnahme 5 für das schallabsorbierende Material 6 ist überwiegend in dem Bereich der Umfangsfläche 4 angeordnet, der im eingebauten Zustand der Radfelge 1 dem Kraftfahrzeug zugewandt ist. Die Breite der Aufnahme 5 beträgt im dargestellten Beispiel ca. 5 cm, ihre Tiefe ca. 2 cm. Die Aufnahme bzw. Vertiefung 5 wird an ihrer Oberseite durch ein Flächengebilde 8 begrenzt, dessen Oberseite 8a diese Sollform 7 ausbildet bzw. wiederherstellt.

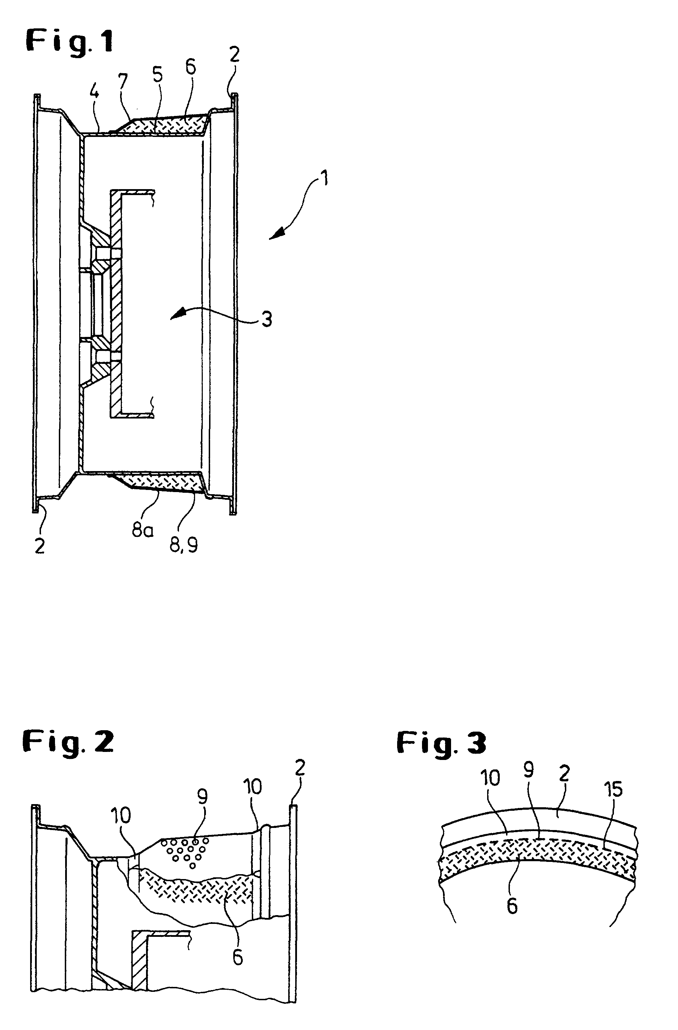

Bei den in den Figuren 1 bis 3 dargestellten Ausführungsbeispielen ist das Flächengebilde 8 als ein in Umfangsrichtung durchlaufendes und sich quer zur Umfangsrichtung über die gesamte Vertiefung 5 erstreckendes perforiertes Metallblech, d. h. Lochblech, ausgebildet. Das in der Vertiefung 5 angeordnete schallabsorbierende Material 6 wird also von dem Lochblech 9 vollständig abgedeckt, wobei das schallabsorbierende Material 6 den Raum unter dem Lochblech 9 ausfüllt. Der Anteil der Perforationsöffnungen an der Gesamtfläche der Abdeckung beträgt ca. 40%.

Gemäß Figur 1 ist das perforierte Metallblech ein Stahl-Lochblech 9, dessen Dicke vorzugsweise 2,0 bis 4,0 mm beträgt und das mit der Radfelge 1, beispielsweise durch Punktschweißen, verschweißt ist. Diese Ausführungsform wird vorrangig bei Stahlradfelgen eingesetzt werden.

Bei dem in den Figuren 2 und 3 dargestellten Ausführungsbeispiel weist die Radfelge 1 beidseits der Vertiefung 5 eine Nut 10 auf, in die die beiden Ränder des Lochblechs 9 jeweils hineinragen. Das Lochblech 9 kann dort durch eine Klipp- oder Schnappverbindung oder auch durch eine Klebeverbindung befestigt sein. Diese Ausführungsform wird vorrangig bei Radfelgen 1 aus Aluminium eingesetzt werden. Das Lochblech 9 ist in diesem Fall auch aus Aluminium hergestellt und weist eine Dicke von vorzugsweise 3,0 bis 5,0 mm auf.

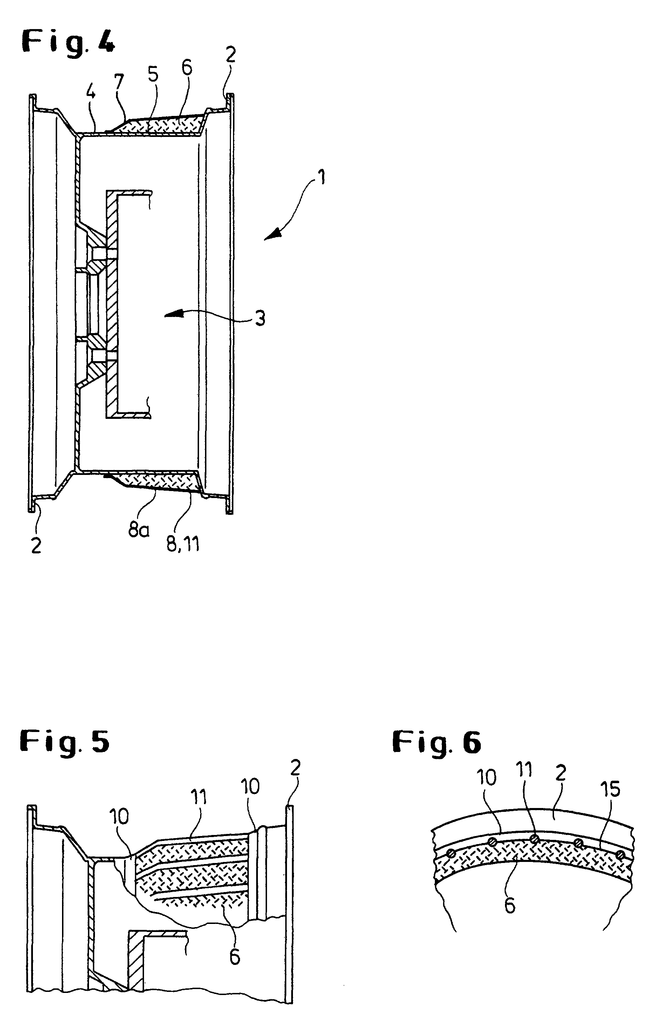

Bei den in den Figuren 4 bis 6 dargestellten Ausführungsbeispielen ist die Aufnahme 5 für das schallabsorbierende Material 6 ebenso ausgeführt wie bei den Ausführungsbeispielen gemäß den Figuren 1 bis 3. Das schallabsorbierende Material 6 wird hier durch blattartige Rippen 11 abgedeckt, deren Unterseite auf dem schallabsorbierenden Material 6 aufliegt und deren Oberseite die Sollform 7 der Radfelge 1 ausbildet. Die Rippen 11 sind in Umfangsrichtung mit Abstand zueinander angeordnet und verlaufen quer zur Umfangsrichtung über die gesamte Breite des schallabsorbierenden Materials 6. Auch bei diesen Ausführungsbeispielen können die Rippen 11 - vorzugsweise bei Stahlfelgen- aus Stahl hergestellt und an die Radfelge 1 angeschweißt sein oder - vorzugsweise bei Aluminiumfelgen- aus Aluminium hergestellt und in beidseits der Aufnahme ausgebildeten Nuten 10 eingesteckt und verklebt oder durch eine Klipp- oder Schnappverbindung befestigt sein. Der Querschnitt der Rippen 11 ist im dargestellten Beispiel kreisförmig.

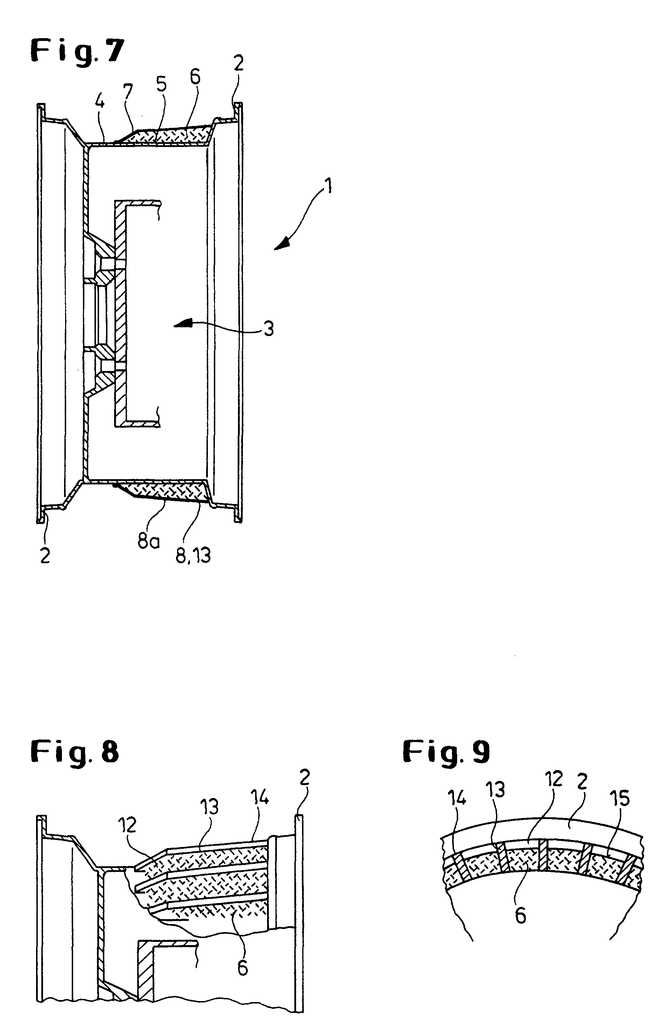

Werden die Radfelgen 1 als Druckgußstücke hergestellt, beispielsweise aus Aluminium, können - wie in den Figuren 7 bis 9 dargestellt- einzelne Aufnahmekammern 12 ausgebildet werden, die durch quer zur Umfangsrichtung verlaufende Stege 13 bzw. Rippen voneinander getrennt sind. Die Stege 13 erstrekken sich in radialer Richtung vom Boden der Aufnahme 5 bis zu der Sollform 7 der Radfelge 1, wobei die Oberseite 14 der Stege 13 diese Sollform 7 ausbildet. Die Befestigung des schallabsorbierenden Materials 6 in den Aufnahmekammern 12 kann mittels einer Klebeverbindung erfolgen.

In allen Ausführungsbeispielen kann die Oberseite des schallabsorbierenden Materials 6 mit einer dünnen perforierten Folie 15, deren Dicke beispielsweise 0,05 mm beträgt, abgedeckt sein, um als Antihaftmittel ein Anbacken von Fremdkörpern am schallabsorbierenden Material 6 sowie das Ausfasern des Materials zu verhindern. In den Ausführungsbeispielen gemäß den Figuren 1 bis 6 ist die Teflonfolie 15 zwischen schallabsorbierendem Material 6 und Lochblech 8 bzw. Rippen 11 angeordnet und auch an diesen befestigt.

## Patentansprüche

1. Radfelge (1) mit einer Umfangsfläche (4) die mit einem auf der Radfelge (1) aufmontierbaren Reifen einen Hohlraum ausbildet sowie quer zur Umfangsrichtung eine vorgegebene Sollform (7) aufweist und längs der sich ein schallabsorbierendes Material erstreckt, das im Hohlraum an der Radfelge anliegt und unterhalb eines Flächengebildes angeordnet ist, das sich quer über die gesamte Breite des schallabsorbierenden Materials erstreckt,
**dadurch gekennzeichnet, daß** in der Umfangsfläche (4) eine vertiefte Aufnahme (5) für das schallabsorbierende Material (6) ausgebildet ist und die Oberseite (8a) des Flächengebildes (8) mit der vorgegebenen, eigentlichen Sollform (7) der Umfangsfläche (4) übereinstimmt.

2. Radfelge nach Anspruch 1, **dadurch gekennzeichnet, daß** die Aufnahme (5) in Umfangsrichtung durchgehend verläuft.

3. Radfelge nach Anspruch 1 oder 2, **dadurch gekennzeichnet, daß** das Flächengebilde (8) eine in Umfangsrichtung durchgehend verlaufende perforierte Abdeckung (9) ist.

4. Radfelge nach Anspruch 1 oder 2, **dadurch gekennzeichnet, daß** das Flächengebilde (8) als in Umfangsrichtung mit Abstand zueinander angeordnete, quer zur Umfangsrichtung verlaufende Rippen (11) ausgebildet ist.

5. Radfelge nach einem der Ansprüche 1 bis 4, **dadurch gekennzeichnet, daß** die Flächengebilde (8) an die Umfangsfläche (4) geschweißt sind.

6. Radfelge nach einem der Ansprüche 1 bis 4, **dadurch gekennzeichnet, daß** beidseits der Aufnahme (5) Befestigungsnuten (10) vorgesehen sind, in denen die Flächengebilde durch eine Klipp- oder durch eine Klebeverbindung befestigt sind.

7. Radfelge nach Anspruch 1, **dadurch gekennzeichnet, daß** die Aufnahme (5) aus einzelnen Aufnahmekammern (12) gebildet ist und die Flächengebilde (8) die Oberseiten (14) quer zur Umfangsrichtung verlaufender Stege (13) sind, die die Aufnahmekammern (12) voneinander trennen.

8. Radfelge nach einem der Ansprüche 1 bis 7, **dadurch gekennzeichnet, daß** auf die Oberseite des schallabsorbierenden Materials (6) eine dünne perforierte Folie (15) aufgebracht ist.

9. Radfelge nach einem der Ansprüche 3 oder 8, **dadurch gekennzeichnet, daß** die Gesamtfläche der Perforationsöffnungen mehr als 40% der Abdeckfläche beträgt.

## Claims

1. Wheel rim with a peripheral area which together with a tyre which can be mounted on the wheel rim forms a cavity and at right angles to the peripheral direction has a pre-determined course and along which a sound absorbing material extends wherein this material contacts against the wheel rim and is arranged below a surface form which extends at right angles over the entire breadth of the sound absorbing material
**characterised in that**
in the peripheral area (4) a depressed mount (5) for the sound absorbing material (6) is formed and the upper side (8a) of the surface form (8) corresponds with the pre-determined course (7) of the peripheral area (4).

2. Wheel rim according to claim 1 **characterised in that** the mount (5) runs continuously in the peripheral direction.

3. Wheel rim according to claim 1 or 2 **characterised in that** the surface form (8) is a perforated cover (9) running continuously in the peripheral direction.

4. Wheel rim according to claim 1 or 2 **characterised in that** the surface form (8) is formed as ribs (11) which are arranged spaced apart in the peripheral direction and run at right angles to the peripheral direction.

5. Wheel rim according to one of the claims 1 to 4 **characterised in that** the surface forms (8) are welded to the peripheral area (4).

6. Wheel rim according to one of the claims 1 to 4 **characterised in that** on both sides of the mount (5) fixture grooves (10) are provided, in which the surface forms are fixed by a clip or adhesive connection.

7. Wheel rim according to claim 1 **characterised in that** the mount (5) is formed from individual mounting chambers and the surface forms (8) are the upper sides (14) of webs (13) running at right angles to the peripheral direction which separate the mounting chambers (12) from each other.

8. Wheel rim according to one of the claims 1 to 7 **characterised in that** a thin perforated film (15) is placed upon the upper side of the sound absorbing material (6).

9. Wheel rim according to one of the claims 3 to 8
**characterised in that** the entire area of the perforation openings amounts to more than 40% of the cover area.

## Revendications

1. Jante (1) comprenant une surface périphérique (4) qui forme une cavité avec un pneu pouvant être monté sur la jante (1), qui présente une forme théorique (7) prédéfinie transversalement à la direction du pourtour et le long de laquelle s'étend une matière absorbant le bruit qui est appliquée contre la jante dans la cavité et disposée sous une surface s'étendant transversalement sur toute la largeur de la matière absorbant le bruit, **caractérisée en ce qu'**un logement (5) pour la matière absorbant le bruit (6) est noyé dans la surface périphérique (4) et **en ce que** le dessus (8a) de la surface (8) coïncide avec la véritable forme théorique (7) prédéfinie de la surface périphérique (4).

2. Jante selon la revendication 1, **caractérisée en ce que** le logement (5) s'étend de manière ininterrompue dans la direction du pourtour.

3. Jante selon la revendication 1 ou 2, **caractérisée en ce que** la surface (8) est un recouvrement perforé (9) s'étendant de manière ininterrompue dans la direction du pourtour.

4. Jante selon la revendication 1 ou 2, **caractérisée en ce que** la surface (8) est réalisée en tant que nervures (11) disposées de manière espacée les unes des autres dans la direction du pourtour et s'étendant transversalement à la direction du pourtour.

5. Jante selon l'une des revendications 1 à 4, **caractérisée en ce que** la surface (8) est soudée à la surface périphérique (7).

6. Jante selon l'une des revendications 1 à 4, **caractérisée en ce que** de part et d'autre du logement (5) sont prévues des rainures de fixation (10) dans lesquelles les surfaces sont fixées par encliquetage ou par collage.

7. Jante selon la revendication 1, **caractérisée en ce que** le logement (5) est constitué de différents compartiments de réception (12), et **en ce que** les surfaces (8) sont les dessus (14) de barrettes (13) s'étendant transversalement à la direction du pourtour et séparant les compartiments de réception (12) les uns des autres.

8. Jante selon l'une des revendications 1 à 7, **caractérisée en ce qu'**une mince pellicule perforée (15) est appliquée sur le dessus de la matière absorbant le bruit (6).

9. Jante selon la revendication 3 ou 8, **caractérisée en ce que** les perforations occupent au total plus de 40% de la surface de recouvrement.
